# EUROPÄISCHE PATENTSCHRIFT

(11) **EP 3 661 879 B1**
(45) Veröffentlichungstag und Bekanntmachung des Hinweises auf die Patenterteilung: **01.05.2024**
(21) Anmeldenummer: 18750162.2
(22) Anmeldetag: 02.08.2018
(51) Int. Cl.: C02F 3/12, F28D 21/00, C02F 103/00, C02F 1/44, F24D 17/00, E03C 1/00, F28D 9/00, F24D 17/02, F28F 19/01, F28D 9/04

(54) **GRAUWASSERWÄRMERÜCKGEWINNUNGSSYSTEM UND VERFAHREN**
GREY WATER HEAT RECOVERY SYSTEM AND METHOD
SYSTÈME ET MÉTHODE DE RÉCUPÉRATION DE CHALEUR DES EAUX GRISES

(30) Priorität: 04.08.2017 AT 506522017
(43) Veröffentlichungstag der Anmeldung: 10.06.2020
(73) Patentinhaber: Huber, Walter, 2604 Theresienfeld (AT)
(72) Erfinder: Huber, Walter, 2604 Theresienfeld (AT)
(74) Vertreter: Gibler & Poth Patentanwälte KG
(86) Internationale Anmeldenummer: PCT/EP2018/070974
(87) Internationale Veröffentlichungsnummer: WO 2019/025531

(56) Entgegenhaltungen:
- US-A1- 2013 153 493
- US-A1- 2016 003 506
- Anonym: "Greywater as a source of energy", Google Suche mit Keywords: "greywater biological filter treatment heat recovery" , 11. Juni 2017 (2017-06-11), XP055504573, Gefunden im Internet: URL:https://web.archive.org/web/2017061102 5142/http://www.asio.cz:80/en/greywater-as -a-source-of-energy [gefunden am 2018-09-05]
- OGUZHAN CULHA ET AL: "Heat exchanger applications in wastewater source heat pumps for buildings: A key review", ENERGY AND BUILDINGS, Bd. 104, 1. Oktober 2015 (2015-10-01), Seiten 215-232, XP055504465, CH ISSN: 0378-7788, DOI: 10.1016/j.enbuild.2015.07.013

## Beschreibung

Die Erfindung betrifft ein Grauwasserwärmerückgewinnungssystem gemäß dem Patentanspruch 1.

Es sind Grauwasserwärmerückgewinnungssysteme bekannt, deren Aufgabe es ist Wärmeenergie aus dem Grauwasser rückzugewinnen. Durch die zunehmende Gebäudedämmung nimmt die für das Heizen benötigte Wärmeenergie ab, während die benötigte Wärmeenergie für das Warmwasser im Wesentlichen konstant bleibt. Dadurch steigt der Anteil der durch das Warmwasser aufgewendete Wärmeenergie im Vergleich zu der durch die Heizung aufgewendete Wärmeenergie. Ein Problem bekannter Grauwasserwärmerückgewinnungssysteme ist, dass das Grauwasser Wärmeübertrager mit hohen Wirkungsgraden verschmutzt und verstopft. Es werden daher eher Wärmeübertrager mit geringen Wirkungsgraden verwendet, welche gegenüber Verschmutzungen weniger anfällig sind, oder aufwendig gestaltete Filteranlagen, welche den Wärmeübertragern vorgelagert sind und einen hohen Wartungsbedarf haben.

Aus der DE 31 19 809 A1 ist eine Vorrichtung zum Rückgewinnen von Wärme aus verschmutztem Abwasser bekannt, wobei der Wärmeübertrager zwischen zwei mechanischen Filtern angeordnet ist, wobei durch ein ständiges Umschalten des Wasserstromes erreicht wird, dass jeweils ein Filter das Abwasser vor dem Wärmeübertrager filtert und der andere Filter von dem gefilterten Abwasser nach dem Wärmeübertrager rückgespult wird.

Aus der DE 23 37 746 A1 ist eine Einrichtung zur Wärmerückgewinnung aus dem Abwasser für ein Hallenbad bekannt, bei welchem der Wärmetauscher aus einem megnetostriktivem Material besteht, welches durch eine hochfrequente Spannung in Schwingung gesetzt wird, um derart Schmutzablagerungen zu vermeiden.

Aus der DE 10 2009 037 161 B4 ist eine Anlage zur Wiederverwertung von Grauwasser vorgesehen. Primäre Aufgabe dieser Anlage ist es, Grauwasser biologisch für die weitere Verwendung aufzubereiten. Hierbei wird das Wasser zunächst in einen Sammelbehälter geleitet, in welchem ein Wärmetauscher angeordnet ist. Das Grauwasser wird anschließend in einem Behandlungsbehälter biologisch aufbereitet und in einen Betriebswasserbehälter geleitet, in welchem ein weiterer Wärmetauscher angeordnet ist. Durch diesen weiteren Wärmetauscher kann das Wasser in dem Betriebswasserbehälter auf eine niedrige Temperatur abgekühlt werden, damit das Wasser länger aufbewahrt werden kann. Da sowohl der Sammelbehälter, der Behandlungsbehälter als auch der Betriebswasserbehälter regelmäßig abgeschlemmt werden müssen, wird regelmäßig wärmehaltiges Wasser verloren. Die beiden Wärmetauscher sind weiters entsprechend verschmutzungsresistent auszubilden, wodurch diese nur geringe Wirkungsgrade aufweisen können. Dokument XP055504573 "Greywater as a source of energy", 11. Juni 2017 (www.asio.cz:80/en/greywater-as-a-source-of-energy) bezieht sich auf ein Grauwasserbehandlungssystem umfassend eine Wärmeübertragungsvorrichtung zur Erwärmung von Frischwasser. Dokument OGUZHAN CULHA ET AL: "Heat exchanger applications in wastewater source heat pumps for buildings: A key review", ENERGY AND BUILDINGS, Bd. 104, 1. Oktober 2015, Seiten 215-232 bezieht sich auf Wärmerückgewinnung gereinigtes Abwassers.

Aus der US 2016/003506 A1 ist eine Schmutzwasseraufbereitungsanlage bekannt, wobei vorgesehen ist, dass Wärme von dem Schmutzwasser wiederverwertet wird. Dies erfolgt mittelbar über eine Wärmepumpe, wobei die Wärmepumpe Energie aus dem Vortank, dem Aufbereitungstank oder dem Speichertank aufnehmen kann. Aus der US 2013/0153493 A1 ist der Aufbau eines Bioreaktors mit einem Membranfilter bekannt, welcher u.a. für die Grauwasseraufbereitung vorgesehen ist.

Aufgabe der Erfindung ist es daher ein Grauwasserwärmerückgewinnungssystem der eingangs genannten Art anzugeben, mit welchem die genannten Nachteile vermieden werden können, welches kompakt und wartungsarm ist, aber dennoch mit einem hohen Durchsatz gleichzeitig einen hohen Wirkungsgrad erreichen kann. Erfindungsgemäß wird dies durch die Merkmale des Patentanspruches 1 erreicht. Dadurch ergibt sich der Vorteil, dass das Grauwasserwärmerückgewinnungssystem bei kompakten Abmessungen und hohem Durchsatz einen hohen Wirkungsgrad erreichen kann, wobei dennoch der Aufwand an Wartung sehr niedrig ist. Durch den niedrigen Aufwand an Wartung ist das Grauwasserwärmerückgewinnungssystem besonders gut für Wohnbauten geeignet, und nicht nur bei Großanlagen wirtschaftlich. Durch die Filtermembran kann das Grauwasser derart gut gereinigt werden, dass dieses durch eine Wärmeübertragungsvorrichtung mit hohem Wirkungsgrad geführt werden kann, welche üblicherweise sehr anfällig gegenüber Verschmutzungen ist. Durch den Belebungsbehälter erfolgt eine andauernde biologische Reinigung des Grauwassers, wodurch die Reinigungsanlage mit sehr wenig Wartung betrieben werden kann. Dadurch kann auf wirtschaftliche Weise der Energieverbrauch für die Bereitstellung von Warmwasser in Gebäuden gesenkt werden.

Weiters betrifft die Erfindung ein Verfahren zur Wärmerückgewinnung aus Grauwasser gemäß dem Patentanspruch 13.

Aufgabe der Erfindung ist es daher weiters ein Verfahren der eingangs genannten [weiter auf Seite 3 der ursprünglichen Beschreibung]

Art anzugeben, mit welchem die genannten Nachteile vermieden werden können, welches mit einem hohen Durchsatz und wenig Wartung einen hohen Wirkungsgrad erreichen kann.

Erfindungsgemäß wird dies durch die Merkmale des Patentanspruches 13 erreicht.

Die Vorteile des Verfahrens entsprechen den Vorteilen des Grauwasserwärmerückgewinnungssystems.

Die Unteransprüche betreffen weitere vorteilhafte Ausgestaltungen der Erfindung.

Die Erfindung wird unter Bezugnahme auf die beigeschlossenen Zeichnungen, in welcher lediglich bevorzugte Ausführungsformen beispielhaft dargestellt sind, näher beschrieben. Dabei zeigt
Fig. 1 eine erste bevorzugte Ausführungsform eines Grauwasserwärmerückgewinnungssystems als schematische Darstellung; und
Fig. 2 eine zweite bevorzugte Ausführungsform eines Grauwasserwärmerückgewinnungssystems als schematische Darstellung.

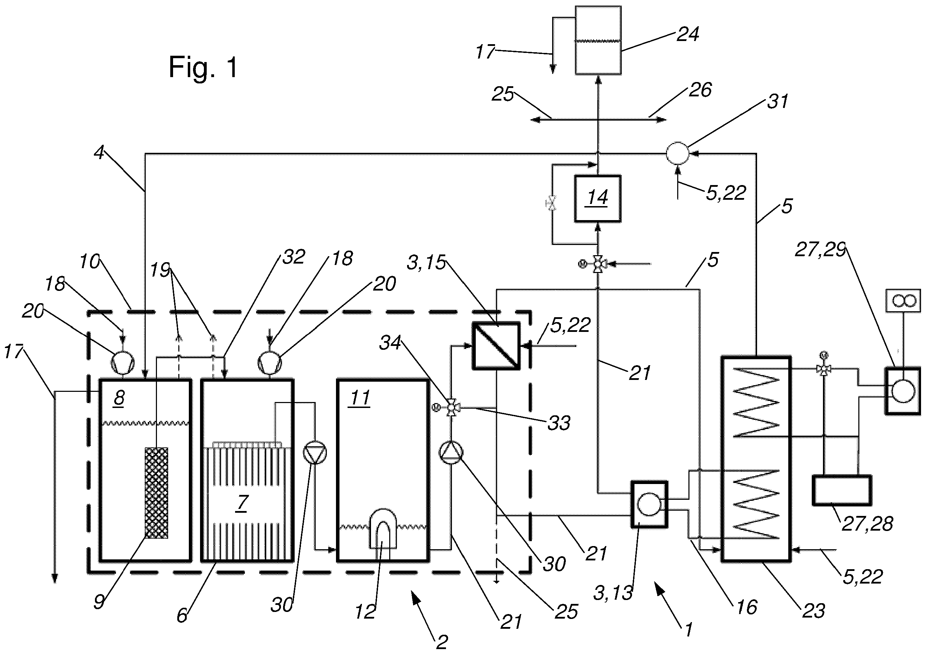

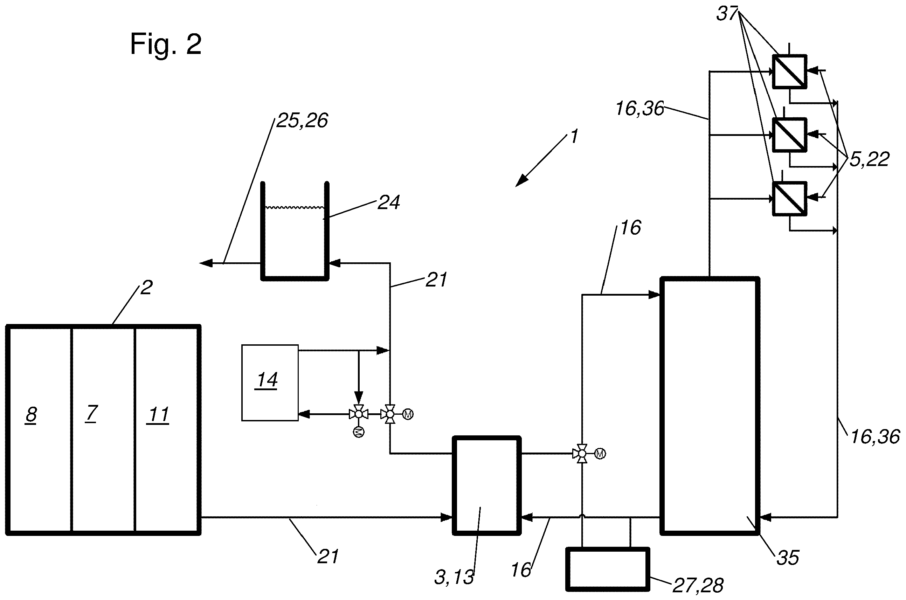

Fig. 1 und 2 zeigen bevorzugte Ausführungsformen eines Grauwasserwärmerückgewinnungssystems 1 umfassend eine Reinigungsanlage 2 und eine Wärmeübertragungsvorrichtung 3, wobei die Reinigungsanlage 2 ausgebildet ist Grauwasser aus einer Grauwasserleitung 4 zu reinigen, wobei ein Ausgang der Reinigungsanlage 2 mit der Wärmeübertragungsvorrichtung 3 verbunden ist, wobei die Wärmeübertragungsvorrichtung 3 ausgebildet ist Wärmeenergie von dem gereinigten Grauwasser auf ein Frischwasser in einer Frischwasserleitung 5 zu übertragen.

Ein Grauwasserwärmerückgewinnungssystem 1 ist ein System zur Rückgewinnung von Wärmeenergie aus einem Grauwasser. Grauwasser ist eine Bezeichnung von fäkalienfreien Abwässern, insbesondere aus Badewannen, Duschen, Waschmaschinen, Geschirrspülern und dergleichen. Derartige Einrichtungen und Maschinen können als Grauwassererzeuger 31 bezeichnet werden. In Fig. 1 ist symbolisch lediglich ein Grauwassererzeuger 31 eingezeichnet, wobei tatsächlich eine Vielzahl an Grauwassererzeugern 31 in einem Gebäude vorgesehen sein können. Das Grauwasser der unterschiedlichen Grauwassererzeuger 31 kann dann in einer, insbesondere dem Gebäude zugehörenden, Grauwasserleitung 4 gesammelt und dem Grauwasserwärmerückgewinnungssystem 1 zugeführt werden. Übliche Verschmutzungen von Grauwasser sind Hautschuppen, Haare, Seifenreste, Fette, Speisereste und dergleichen. Die Temperatur des Grauwassers wird beim Duschen oder Baden in der Regel von dem Verbraucher mittels einer Armatur des Grauwassererzeugers 31 eingestellt. Um eine für viele angenehme Temperatur von 38°C zu erreichen kann beispielsweise Warmwasser mit einer Temperatur von 60°C im Verhältnis 56:44 mit einem Kaltwasser mit einer Temperatur von 10 C vermischt werden. Bei Waschmaschinen oder Geschirrspülmaschinen hängt die Temperatur des Grauwassers in der Regel vom verwendeten Modell und Programm ab.

Das Grauwasser kann bevorzugt eine Temperatur kleiner 60°C, insbesondere kleiner 45°C, aufweisen.

Im Gegensatz zum Grauwasser werden fäkalienbelastete Abwässer aus Toiletten als Schwarzwasser bezeichnet.

Das Grauwasser der Grauwasserleitung 4 wird einer Reinigungsanlage 2 des Grauwasserwärmerückgewinnungssystems 1 zugeführt, wobei das Grauwasser in der Reinigungsanlage 2 gereinigt wird. Beim Erreichen der Reinigungsanlage 2 ist das Grauwasser üblicherweise geringfügig abgekühlt, insbesondere auf 30°C bis 35°C.

Nach der Reinigungsanlage 2 wird das gereinigte Grauwasser durch die Wärmeübertragungsvorrichtung 3 geleitet, wobei das Grauwasser in der Wärmeübertragungsvorrichtung 3 einen Teil seiner Wärmeenergie an ein Frischwasser, insbesondere Kaltwasser, in einer Frischwasserleitung 5 überträgt. Als Frischwasser wird hierbei ein noch unverschmutztes Wasser bezeichnet, welches als Kaltwasser oder Warmwasser vorliegen kann. Die Wärmeübertragungsvorrichtung 3 kann insbesondere wenigstens einen Wärmeübertrager 15 und/oder wenigstens eine Wärmepumpe 13 aufweisen.

Vorgesehen ist, dass die Reinigungsanlage 2 einen Belebungsbehälter 6 mit Mikroorganismen aufweist, wobei die Mikroorganismen organische Bestandteile des Grauwassers zersetzen, und dass in dem Belebungsbehälter 6 eine Filtermembran 7 angeordnet ist. Der Belebungsbehälter 6 ist ein, insbesondere nach oben hin offener, Behälter der Reinigungsanlage 2, in welchem Mikroorganismen vorhanden sind, welche Verschmutzungen des Grauwassers in Form organischer Bestandteile biologisch zersetzen. Insbesondere können die Mikroorganismen gezielt in den Belebungsbehälter 6 eingebracht werden, da Grauwasser im Vergleich zu Schwarzwasser wenige Mikroorganismen in sich trägt. In dem Belebungsbehälter 6 ist eine Filtermembran 7 angeordnet, welche vom dem Grauwasser durchströmt wird. Die Filtermembran 7 kann insbesondere in den Belebungsbehälter 6 eingetaucht sein. Bei dem Durchströmen der Filtermembran 7 werden die anorganischen und organischen Bestandteile des Grauwassers, welche größer als die Poren der Filtermembran 7 sind, mechanisch zurückgehalten. Diese ausgefilterten Bestandteile fällen aus oder bleiben an der Oberfläche der Filtermembran 7 haften, wo diese dann durch die Mikroorganismen zersetzt werden. Durch die Mikroorganismen wird daher die Filtermembran 7 laufend gereinigt, wodurch diese auch bei vergleichsweise kleiner Porengröße nicht verstopft. Das Grauwasser kann daher gründlicher gereinigt werden als bei herkömmlichen Filtermethoden, wodurch das Grauwasser durch eine Wärmeübertragungsvorrichtung 3 mit hohem Wirkungsgrad geführt werden kann, ohne diesen zu verstopfen. Durch die ständige Reinigung der Filtermembran 7 durch die Mikroorganismen ist eine zusätzliche externe Reinigung im Rahmen einer Wartung nur selten notwendig, beispielsweise jährlich.

Dadurch ergibt sich der Vorteil, dass das Grauwasserwärmerückgewinnungssystem 1 bei kompakten Abmessungen und hohem Durchsatz einen hohen Wirkungsgrad erreichen kann, wobei dennoch der Aufwand an Wartung sehr niedrig ist. Durch den niedrigen Aufwand an Wartung ist das Grauwasserwärmerückgewinnungssystem 1 besonders gut für Wohnbauten geeignet, und nicht nur bei Großanlagen wirtschaftlich. Durch die Filtermembran 7 kann das Grauwasser derart gut gereinigt werden, dass dieses durch eine Wärmeübertragungsvorrichtung 3 mit hohem Wirkungsgrad geführt werden kann, welche üblicherweise sehr anfällig gegenüber Verschmutzungen ist. Durch den Belebungsbehälter 6 erfolgt eine andauernde biologische Reinigung des Grauwassers, wodurch die Reinigungsanlage mit sehr wenig Wartung betrieben werden kann. Dadurch kann auf wirtschaftliche Weise der Energieverbrauch für die Bereitstellung von Warmwasser in Gebäuden gesenkt werden.

Vorgesehen ist weiters ein Verfahren zur Wärmerückgewinnung aus Grauwasser, wobei das Grauwasser in der Reinigungsanlage 2 gereinigt wird, wobei das in der Reinigungsanlage 2 gereinigte Grauwasser der Wärmeübertragungsvorrichtung 3 zugeführt wird, wobei in der Wärmeübertragungsvorrichtung 3 Wärmeenergie von dem gereinigten Grauwasser an das Frischwasser übertragen wird, wobei die Reinigungsanlage 2 den Belebungsbehälter 6 mit Mikroorganismen aufweist, wobei in dem Belebungsbehälter 6 organische Bestandteile des Grauwassers durch die Mikroorganismen zersetzt werden, wobei das Grauwasser durch die in dem Belebungsbehälter 6 angeordnete Filtermembran 7 hindurch geführt wird.

Besonders bevorzugt kann vorgesehen sein, dass eine Porengröße der Filtermembran 7 mindestens 0,1 µm, insbesondere mindestens 0,2 µm, besonders bevorzugt mindestens 0,4 µm, beträgt. Die Porengröße kann insbesondere die nominale Porengröße sein, welche das Maximum der Porengrößenverteilung angibt. Bei einer Porengröße von mindestens 0,1 µm kann auch von einem Mikrofilter gesprochen werden. Bei einer derartigen Porengröße werden Bakterien, Pilze und dergleichen von der Filtermembran 7 zurückgehalten, während Viren und andere Makromoleküle nicht zurückgehalten werden. Da es die primäre Aufgabe der Filtermembran 7 ist die Wärmeübertragungsvorrichtung 3 vor einem Verstopfen zu schützen, welches insbesondere durch das Anwachsen von Biofilmen aus Bakterien verursacht wird, ist eine derartige Porengröße für die Aufgabe ausreichend klein, während diese weiterhin einen guten Durchlass, welcher stark von der Porengröße abhängt, gewährleistet. Viren, welche üblicherweise bei Membranbelebungsreaktoren mittels Ultrafiltration, also Porengrößen kleiner 0,1 µm, ausgefiltert werden, sind im gegenständlichen Fall von geringerer Bedeutung.

Insbesondere kann vorgesehen sein, dass durch die Filtermembran 7 Teilchen mit einem Durchmesser von mindestens 0,1 µm, insbesondere mindestens 0,2 µm, besonders bevorzugt mindestens 0,4 µm, zurückgehalten werden.

Weiters kann vorgesehen sein, dass die Porengröße der Filtermembran 7 maximal 10 µm, insbesondere maximal 3 µm, besonders bevorzugt maximal 1 µm, beträgt.

Bevorzugt kann weiters ein Gebäude, insbesondere ein Wohngebäude, mit dem Grauwasserwärmerückgewinnungssystem 1 vorgesehen sein.

Das Gebäude kann insbesondere ein Wohngebäude für mindestens zwanzig Einwohner, insbesondere mindestens fünfzig Einwohner, sein. Hierbei hat sich gezeigt, dass das Grauwasserwärmerückgewinnungssystem 1 insbesondere ab zwanzig Einwohner wirtschaftlich ist.

Die Dimensionierung des Grauwasserwärmerückgewinnungssystem 1, insbesondere bezüglich Fassungsvermögen und/oder Durchsatz des Belebtbehälters 6, kann dabei abhängig von der vorgesehenen Anzahl der Einwohner des Gebäudes sein.

Insbesondere kann vorgesehen sein, dass pro fünfzig vorgesehene Einwohner des Gebäudes ein Durchsatz des Belebtbehälters 6 500 l/h bis 1000 l/h, insbesondere im Wesentlichen 800 l/h, beträgt.

Hierbei kann der Belebtbehälter 6 bevorzugt ein Fassungsvermögen von im Wesentlichen 1000l aufweisen.

Weiters kann vorgesehen sein, dass die Reinigungsanlage 2 eine, dem Belebungsbehälter 6 vorgelagerte Vorklärstufe 8 mit einem Sieb 9 aufweist. In der Vorklärstufe 8 können größere und nicht zersetzbare Verunreinigungen des Grauwassers bereits ausgefällt oder ausgesiebt werden. Insbesondere kann vorgesehen sein, dass die Vorklärstufe 8 einen Eingang aufweist, welcher vorgesehen ist mit der Grauwasserleitung 4 verbunden zu werden. Dadurch kann die Durchgangsleistung und der Wartungsbedarf der Reinigungsanlage 2 weiter reduziert werden.

Weiters kann vorgesehen sein, dass das Grauwasser aus der Grauwasserleitung 4 in die Vorklärstufe 8 gelangt und in der Vorklärstufe 8 durch den Sieb 9 zu einem Ausgang der Vorklärstufe 8 geführt wird. Der Ausgang der Vorklärstufe 8 kann insbesondere mittels einer Zwischenleitung 32 mit einem Eingang des Belebungsbehälters 6 verbunden sein.

Insbesondere kann vorgesehen sein, dass die Vorklärstufe 8 für einen variablen Füllstand ausgebildet ist, damit die Vorklärstufe 8 als Pufferspeicher für das an sich unregelmäßig anfallende Grauwasser wirken kann.

Weiters kann vorgesehen sein, dass die Vorklärstufe 8 über eine Überlaufleitung 17 verfügt, damit weiteres Grauwasser beim Überschreiten eines maximalen Füllstandes in einen Kanal abgeleitet werden kann.

Gemäß der bevorzugten Ausführungsform in Fig. 1 beträgt der maximale Füllstand der Vorklärstufe 8 1000l.

Weiters kann vorgesehen sein, dass die Reinigungsanlage 2 einen, dem Belebungsbehälter 6 nachgelagerten Speicherbehälter 11 mit einer Desinfektionseinrichtung 12, insbesondere einer UV-Lampe, aufweist. Der Speicherbehälter 11 ist bevorzugt leitungstechnisch zwischen dem Belebungsbehälter 6 und der Wärmeübertragungsvorrichtung 3 angeordnet. Der Speicherbehälter 11 ist dazu vorgesehen das gereinigte Grauwasser aus dem Belebungsbehälter 6 bis zur Verwendung bei der Wärmeübertragungsvorrichtung 3 zu speichern. Damit sich etwaige Mikroorganismen nicht im gereinigten Grauwasser vermehren ist eine Desinfektionseinrichtung 12 vorgesehen, welche durch die Filtermembran 7 gelangte Mikroorganismen abtötet. Die Desinfektionseinrichtung 12 kann besonders einfach als UV-Lampe ausgebildet sein.

Bevorzugt kann vorgesehen sein, dass die Reinigungsanlage 2 in einem, insbesondere thermisch isolierten, Gehäuse 10 angeordnet ist. Insbesondere kann der Belebungsbehälter 6, die Vorklärstufe 8 und der Speicherbehälter 11 in dem Gehäuse 10 angeordnet sein. Weiters kann vorgesehen sein, dass auch der Wärmeübertrager 15 in dem Gehäuse 10 angeordnet ist. Das Gehäuse 10 kann die Komponenten der Reinigungsanlage 2 vor äußeren Einflüssen schützen. Zusätzlich kann das Gehäuse eine zusätzliche thermische Isolation aufweisen. Durch die thermische Isolation kann erreicht werden, dass das Grauwasser während der Reinigung und Speicherung in der Reinigungsanlage 2 kaum Wärmeenergie verliert.

Weiters kann vorgesehen sein, dass der Belebungsbehälter 6, die Vorklärstufe 8 und/oder der Speicherbehälter 11 eine thermische Isolation aufweisen.

Insbesondere kann vorgesehen sein, dass ein Temperaturverlust des Grauwassers in der Reinigungsanlage 2, also insbesondere vom Ausgang der Grauwasserleitung 4 bis zum Eingang der Wärmeübertragungsvorrichtung 3, maximal 10°C, insbesondere maximal 5°C, besonders bevorzugt maximal 2°C, beträgt.

Eine Temperatur in dem thermisch isolierten Gehäuse 10 kann insbesondere zwischen 20°C und 45 °C, bevorzugt 30°C bis 35 °C betragen.

Insbesondere kann vorgesehen sein, dass der Belebungsbehälter 6 und/oder die Vorklärstufe 8 belüftet sind. Durch die Belüftung kann der biologische Abbauprozess in dem Belebungsbehälter 6 und/oder der Vorklärstufe 8 beschleunigt werden.

Bevorzugt kann der Belebungsbehälter 6 und/oder die Vorklärstufe 8 eine Zuluftleitung 18 und eine Abluftleitung 19 aufweisen. Die Zuluftleitung 18 kann insbesondere eine Luftpumpe 20 aufweisen.

Weiters kann vorgesehen sein, dass die Zuluftleitung 18 und eine Abluftleitung 19 über einen, in Fig. 1 und 2 nicht dargestellten, weiteren Wärmeübertrager miteinander gekoppelt sind, sodass die durch die Abluft verloren gegangene Wärmeenergie gering gehalten werden kann.

Weiters kann vorgesehen sein, dass ein freies Ende der Zuluftleitung 18 und/oder ein freies Ende der Abluftleitung 19 in dem Gehäuse 10 angeordnet sind. Eine Ansaugung oder Ablass der Luft für die Belebung kann daher aus oder in das Gehäuse 10 erfolgen.

Bevorzugt kann vorgesehen sein, wobei ein Ausgang der Reinigungsanlage 2 mit einer Ausgangsleitung 21 verbunden ist, und dass das gereinigte Grauwasser in der Ausgangsleitung 21 die Wärmeübertragungsvorrichtung 3 durchströmt. Weiters kann vorgesehen sein, dass das in der Reinigungsanlage 2 gereinigte Grauwasser in die Ausgangsleitung 21 geführt wird und die Wärmeübertragungsvorrichtung 3 durchströmt.

Besonders bevorzugt kann vorgesehen sein, dass die Wärmeübertragungsvorrichtung 3 einen Wärmeübertrager 15 mit der Frischwasserleitung 5 aufweist. Der Wärmeübertrager 15, oft auch als Wärmetauscher bezeichnet, ist ein Apparat, in welchem Wärme von einem fluiden Medium höherer Eintrittstemperatur, nämlich dem gereinigten Grauwasser von der Reinigungsanlage 2, stetig an ein Medium niedrigerer Eintrittstemperatur, nämlich dem kalten Frischwasser in der Frischwasserleitung 5, übertragen wird. Der Wärmeübergang kann insbesondere durch eine Trennwand erfolgen, wobei der Wärmeübertrager 15 dann als Rekuperator ausgebildet ist. Insbesondere kann die Ausgangsleitung 21 und die Frischwasserleitung 5 durch den Wärmeübertrager 15 führen.

Der Wärmeübertrager 15 kann insbesondere direkt von dem gereinigten Grauwasser durchströmt werden, und ist nicht in einem Behälter angeordnet. Dadurch kann ein sehr hoher Durchsatz des Grauwasserwärmerückgewinnungssystems 1 erreicht werden.

Besonders bevorzugt kann vorgesehen sein, dass der Wärmeübertrager 15 einen Wirkungsgrad von mindestens 80%, insbesondere mindestens 90%, besonders bevorzugt mindestens 95%, aufweist. Ein derart hoher Wirkungsgrad kann durch eine sehr große Wärmeübertragungsfläche im Vergleich zu dem Gesamtvolumen des Wärmeübertragers 15 erreicht werden.

Weiters kann vorgesehen sein, dass der Wärmeübertrager 15 als Gegenstromwärmeübertrager ausgebildet ist.

Besonders bevorzugt kann vorgesehen sein, dass der Wärmeübertrager 15 ein Plattenwärmeübertrager ist. Bei einem Plattenwärmeübertrager werden durch mehrere, insbesondere profilierte, Platten mehrere Räume voneinander abgegrenzt, welche alternierend vom gereinigten Grauwasser und vom Frischwasser durchströmt werden. Plattenwärmeübertrager haben den Vorteil eines einfachen Aufbaus und hoher Wirkungsgrade, allerdings sind diese aufgrund der großen Wärmeübertagungsflächen und den geringen Abstand der Platten zueinander anfällig gegenüber Verschmutzungen. Diese Verschmutzungen können aber durch die Filtermembran 7 zuverlässig ferngehalten werden.

Weiters kann vorgesehen sein, dass der Wärmeübertrager 15 ein Spiralwärmeübertrager ist. Bei einem Spiralwärmeübertrager sind zwei Bleche parallel zueinander wie eine Spirale aufgewickelt, wodurch zwei durchgehende Räume für das gereinigte Grauwasser und das Frischwasser mit einer großen Wärmeübertragungsfläche bereitgestellt werden können. Ähnlich wie der Plattenwärmeübertrager kann der Spiralwärmeübertrager einen hohen Wirkungsgrad aufweisen, wenn die beiden Bleche nah zueinander angeordnet sind, wobei auch hier die Anfälligkeit gegenüber Verschmutzungen zunimmt.

Insbesondere kann vorgesehen sein, dass der Wärmeübertrager 15 ein Plattenwärmeübertrager oder ein Spiralwärmeübertrager ist.

Der Wärmeübertrager 15 kann weiters über eine automatische Reinigungseinrichtung verfügen. Die automatische Reinigungseinrichtung kann insbesondere dazu ausgebildet etwaige Ablagerungen in dem Wärmeübertrager 15, beispielsweise aus im Wasser gelösten Stoffen, regelmäßig zu entfernen um den Aufbau eines Films entgegenzuwirken.

Bevorzugt kann weiters vorgesehen sein, dass Wärmeübertrager 15 eine minimale lichte Weite von maximal 30 mm, insbesondere maximal 10 mm, besonders bevorzugt maximal 3 mm, aufweist. Die minimale lichte Weite ist hierbei eine minimale innere geometrische Dimension des Wärmeübertragers 15. Die minimale lichte Weite entspricht hierbei insbesondere dem Durchmesser eines gedachten Teilchens, welche den Wärmeübertrager 15 gerade noch durchqueren kann. Bei einem Plattenwärmetauscher entspricht die minimale lichte Weite insbesondere einem Abstand zweier benachbarter Platten. Bei einem Spiralwärmeübertrager entspricht die minimale lichte Weite insbesondere einem Abstand der spiralförmigen Bleche zueinander. Durch diese geringe minimale lichte Weite des Wärmeübertragers 15 kann ein hoher Wirkungsgrad erzielt werden.

Die minimale lichte Weite des Wärmeübertragers 15 kann weiters bevorzugt maximal 1 mm betragen.

Insbesondere kann vorgesehen sein, dass ein Kaltwassereinlass 22 der Frischwasserleitung 5 eingangseitig mit einem Eingang des Wärmeübertragers 15 verbunden ist. Im Wärmeübertrager 15 nimmt das kalte Frischwasser die Wärmeenergie von dem gereinigten Grauwasser und verlässt den Wärmeübertrager 15 mit einer nur geringfügig, insbesondere maximal 3°C, kälteren Temperatur als das gereinigte Grauwasser an einem Eingang des Wärmeübertragers 15.

Das Frischwasser des Kaltwassereinlasses 22 kann insbesondere eine Temperatur von im Wesentlichen 8°C aufweisen. Diese Temperatur kann abhängig von dem Wasserversorgungsnetze und wetterbedingt variieren.

Das gereinigte Grauwasser kann an einem Ausgang des Wärmeübertragers 15 für das gereinigte Grauwasser insbesondere eine Temperatur zwischen 10°C und 20°C aufweisen.

Weiters kann wenigstens eine, bevorzugt mehrere, Wasserpumpen 30 vorgesehen sein, um das gereinigte Grauwasser zu befördern.

Bevorzugt kann vorgesehen sein, dass die Wärmeübertragungsvorrichtung 3 eine, den Wärmeübertrager 15 überbrückende Bypassleitung 33 aufweist, wobei ein Verhältnis eines Durchsatzes des gereinigten Grauwassers durch den Wärmeübertrager 15 und die Bypassleitung 33 einstellbar ist. Dadurch ergibt sich der Vorteil, dass der Strömungswiderstand durch teilweise Umgehung des Wärmeübertragers 15 vorgebbar verringert werden kann, wodurch die Wasserpumpe 30 leistungsschwächer sein kann. Weiters kann dadurch der Durchsatz des Grauwassers in dem Wärmeübertrager 15 an den Durchsatz des Frischwassers angeglichen werden, da üblicherweise die Menge an zu heizenden Frischwasser kleiner ist als das anfallende Grauwasser. Dadurch kann die Effizienz des Wärmeübertragers 15 verbessert werden.

Die Verteilung des Verhältnisses des Durchsatzes zwischen dem Wärmeübertrager 15 und der Bypassleitung 33 kann insbesondere durch ein Mischventil 34 eingestellt werden.

Das Verhältnis des Durchsatzes zwischen dem Wärmeübertrager 15 und der Bypassleitung 33 kann insbesondere im Wesentlichen 60/40 betragen.

Insbesondere kann vorgesehen sein, dass ein Ausgang des Wärmeübertragers 15 für das Frischwasser zumindest mittelbar mit einem Warmwasserbehälter 23 verbunden ist. In dem Warmwasserbehälter 23 kann das Frischwasser auf für Warmwasser übliche Temperaturen erhitzt werden, insbesondere Temperaturen über 60°C. Der Warmwasserbehälter 23 kann mit dem Grauwassererzeuger 31 verbunden sein.

Bevorzugt kann vorgesehen sein, dass die Wärmeübertragungsvorrichtung 3 eine Wärmepumpe 13 aufweist. Durch die Wärmepumpe 13 kann Wärmeenergie von dem Grauwasser auch auf eine wärmere Flüssigkeit übertragen werden.

Bevorzugt kann vorgesehen sein, dass die Wärmeübertragungsvorrichtung 3 einen Wärmeübertrager 15 und nachfolgend eine Wärmepumpe 13 aufweist. Eine derart ausgebildete bevorzugte Ausführungsform ist in Fig. 1 dargestellt.

Hierbei kann vorgesehen sein, dass ein Ausgang des Wärmeübertragers 15 für das gereinigte Grauwasser zumindest mittelbar mit einer Wärmepumpe 13 verbunden ist, wobei die Wärmepumpe 13 ausgebildet ist zusätzliche Wärmeenergie von dem gereinigten Grauwasser auf das Frischwasser zu übertragen. Die Wärmepumpe 13 kann insbesondere mit dem Warmwasserbehälter 23 verbunden sein, um mit der zusätzlichen Wärmeenergie das Frischwasser in dem Warmwasserbehälter 23 weiter zu erhitzen. Dadurch kann die Wärmeenergie des gereinigten Grauwassers noch effektiver genutzt werden, wodurch die Gesamteffizienz des Grauwasserwärmerückgewinnungssystems 1 weiter erhöht wird.

Der Warmwasserbehälter 23 kann insbesondere mit weiteren Heizeinrichtungen 27, insbesondere einen Heizkessel 28 und/oder eine zusätzliche mit der Umgebung verbundene weitere Wärmepumpe 29, wirkverbunden sein. Dadurch kann die Temperatur im Warmwasserbehälter 23 zuverlässig über die Legionellen Schutztemperatur, insbesondere über 60°C, gehalten werden.

Weiters kann vorgesehen sein, dass der Warmwasserbehälter 23 als Heizkessel, insbesondere als Brennwertkessel, ausgebildet ist.

Weiters kann der Warmwasserbehälter 23 einen Kaltwassereinlass 22 aufweisen.

Zwischen dem Wärmeübertrager 15 und der Wärmepumpe 13 kann die Ausgangsleitung 21 eine weitere in einen Kanal oder einen Grauwasser-Filtrat Speicher führende Abflussleitung 25 aufweisen.

Nach der Wärmepumpe 13 kann das gereinigte Grauwasser insbesondere eine Temperatur von 1° bis 5°C aufweisen.

Insbesondere kann vorgesehen sein, dass das gereinigte Grauwasser in der Ausgangsleitung 21 die Wärmepumpe 13 durchströmt.

Weiters kann vorgesehen sein, dass die Wärmeübertragungsvorrichtung 3 zum Übertragen von Wärmeenergie von dem gereinigten Grauwasser auf das Frischwasser in der Frischwasserleitung 5 ein abgeschlossenes Wärmeübertragungsleitungssystem 16 aufweist. Das Wärmeübertragungsleitungssystem 16 ist dazu vorgesehen die Wärmeenergie von dem Grauwasser auf das Frischwasser zu übertragen. Ein Vorteil des abgeschlossenen Wärmeübertragungsleitungssystems 16 ist, dass die Gefahr, dass Krankheitskeime oder Viren von dem Grauwasser auf das Frischwasser übertragen werden, reduziert werden. Das in dem Wärmeübertragungsleitungssystem 16 angeordnete Fluid kann insbesondere Wasser sein.

In Fig. 1 ist ein einfach ausgebildetes Wärmeübertragungsleitungssystem 16 dargestellt, welches Wärme von der Wärmepumpe 13 zu dem Warmwasserbehälter 23 des Frischwassers transportiert.

Bevorzugt kann vorgesehen sein, dass eine Wärmeübertragung zwischen dem gereinigten Grauwasser und dem Frischwasser lediglich über das Wärmeübertragungsleitungssystem 16 erfolgt. Eine derart ausgebildete Ausführungsform ist in Fig. 2 dargestellt.

Hierbei kann vorgesehen sein, dass lediglich mittels wenigstens einer Wärmepumpe 13 die Wärme von dem gereinigten Grauwasser rückgewonnen wird. Die Wärmeenergie des gereinigten Grauwassers wird dabei in das Wärmeübertragungsleitungssystem 16 eingespeist.

Insbesondere kann vorgesehen sein, dass an der Wärmepumpe 13 in Fig. 2 die Temperatur des gereinigten Grauwasser von einer Ausgangstemperatur auf knapp über den Gefrierpunkt abgekühlt wird.

Die Temperatur in dem Wärmeübertragungsleitungssystem 16 kann insbesondere zwischen 50°C und 70°C, bevorzugt zwischen 60°C und 65 °C, betragen.

Das Wärmeübertragungsleitungssystem 16 kann ebenfalls Heizeinrichtungen 27 aufweisen, um die nötige Temperatur zu erreichen.

Das Wärmeübertragungsleitungssystem 16 kann einen Pufferspeicher 35 aufweisen, von welchem eine Heizwasserleitung 36 ausgeht.

In der Heizwasserleitung 36 sind mehrere Wärmeübergabestationen 37 angeordnet. Die Wärmeübergabestationen 37 können insbesondere einzelnen Wohnungen zugeordnet sein. Über die Wärmeübergabestationen 37 kann kaltes Frischwasser direkt bei den Wohnungen erhitzt werden, wobei Wärme aus dem Wärmeübertragungsleitungssystem 16 entnommen wird. Die Wärmeübergabestationen 37 können insbesondere als weitere Wärmeübertrager mit der Frischwasserleitung 5 ausgebildet sein. Da das Frischwasser erst unmittelbar vor Gebrauch erhitzt wird, wird die Gefahr einer Legionellenverseuchung wesentlich reduziert. Die Grauwassererzeuger 31 sowie die Grauwasserleitung 4 sind in Fig. 2 nicht dargestellt.

Das Wärmeübertragungsleitungssystem 16 kann weiters auch zum Betrieb der Heizung verwendet werden.

Weiters kann vorgesehen sein, dass ein Ausgang der Wärmeübertragungsvorrichtung 3 für das gereinigte Grauwasser zumindest mittelbar mit einer Kühleinrichtung 14 verbunden ist, wobei das gereinigte Grauwasser ein Kühlmedium der Kühleinrichtung 14 ist. Die Kühleinrichtung 14 kann insbesondere eine Gebäudekühlung sein, welche Gebäudekühlung bevorzugt eine Deckenkühlung ist. Dadurch kann das abgekühlte gereinigte Grauwasser zusätzlich zur Kühlung des Gebäudes verwendet werden.

Weiters kann vorgesehen sein, dass an einem Ende der Ausgangsleitung 21 für das gereinigte Grauwasser ein Aufbewahrungsbehälter 24, eine Abflussleitung 25 in den Kanal und/oder Zuflussleitungen 26 zu nicht Frischwasser benötigenden Einrichtungen des Gebäudes, vorzugsweise wie ein WC oder Maschinen wie eine Waschmaschine angeordnet ist. Das gereinigte und insbesondere auch geruchsfreie Grauwasser kann daher nach dessen thermischen Verwertung einer Vielzahl an möglichen Anwendungszwecken zugeführt werden, um den Bedarf des Gebäudes an Frischwasser gering zu halten.

## Patentansprüche

1. Grauwasserwärmerückgewinnungssystem (1) umfassend eine Reinigungsanlage (2) und eine Wärmeübertragungsvorrichtung (3), wobei die Reinigungsanlage (2) ausgebildet ist Grauwasser aus einer Grauwasserleitung (4) zu reinigen, wobei die Reinigungsanlage (2) einen Belebungsbehälter (6) mit Mikroorganismen aufweist, wobei die Mikroorganismen organische Bestandteile des Grauwassers zersetzen, wobei in dem Belebungsbehälter (6) eine Filtermembran (7) angeordnet ist, **dadurch gekennzeichnet, dass** ein Ausgang der Reinigungsanlage (2) mit der Wärmeübertragungsvorrichtung (3) verbunden ist, wobei die Wärmeübertragungsvorrichtung (3) ausgebildet ist, Wärmeenergie von dem nach Durchströmen der Filtermembran (7) gereinigten Grauwasser auf ein Frischwasser in einer Frischwasserleitung (5) zu übertragen.

2. Grauwasserwärmerückgewinnungssystem (1) nach Anspruch 1, **dadurch gekennzeichnet, dass** eine Porengröße der Filtermembran (7) mindestens 0,1 µm, insbesondere mindestens 0,2 µm, besonders bevorzugt mindestens 0,4 µm, beträgt.

3. Grauwasserwärmerückgewinnungssystem (1) nach Anspruch 1 oder 2, **dadurch gekennzeichnet, dass** die Reinigungsanlage (2) eine, dem Belebungsbehälter (6) vorgelagerte Vorklärstufe (8) mit einem Sieb (9) aufweist.

4. Grauwasserwärmerückgewinnungssystem (1) nach einem der Ansprüche 1 bis 3, **dadurch gekennzeichnet, dass** die Reinigungsanlage (2) in einem, insbesondere thermisch, isolierten Gehäuse (10) angeordnet ist.

5. Grauwasserwärmerückgewinnungssystem (1) nach einem der Ansprüche 1 bis 4, **dadurch gekennzeichnet, dass** die Reinigungsanlage (2) einen, dem Belebungsbehälter (6) nachgelagerten Speicherbehälter (11) mit einer Desinfektionseinrichtung (12), insbesondere einer UV-Lampe, aufweist.

6. Grauwasserwärmerückgewinnungssystem (1) nach einem der Ansprüche 1 bis 5, **dadurch gekennzeichnet, dass** die Wärmeübertragungsvorrichtung (3) einen Wärmeübertrager (15) mit der Frischwasserleitung (5) aufweist.

7. Grauwasserwärmerückgewinnungssystem (1) nach Anspruch 6, **dadurch gekennzeichnet, dass** der Wärmeübertrager (15) als Plattenwärmeübertrager ausgebildet ist.

8. Grauwasserwärmerückgewinnungssystem (1) nach einem der Ansprüche 6 oder 7, **dadurch gekennzeichnet, dass** Wärmeübertrager (15) eine minimale lichte Weite von maximal 30 mm, insbesondere maximal 10 mm, besonders bevorzugt maximal 2 mm, aufweist.

9. Grauwasserwärmerückgewinnungssystem (1) nach einem der Ansprüche 6 bis 8, **dadurch gekennzeichnet, dass** die Wärmeübertragungsvorrichtung (3) eine den Wärmeübertrager (15) überbrückende Bypassleitung (33) aufweist, wobei ein Verhältnis eines Durchsatzes des gereinigten Grauwassers durch den Wärmeübertrager (15) und die Bypassleitung (33) einstellbar ist.

10. Grauwasserwärmerückgewinnungssystem (1) nach einem der Ansprüche 1 bis 9, **dadurch gekennzeichnet, dass** die Wärmeübertragungsvorrichtung (3) eine Wärmepumpe (13) aufweist.

11. Grauwasserwärmerückgewinnungssystem (1) nach einem der Ansprüche 1 bis 10, **dadurch gekennzeichnet, dass** die Wärmeübertragungsvorrichtung (3) zum Übertragen von Wärmeenergie von dem gereinigten Grauwasser auf das Frischwasser in der Frischwasserleitung (5) ein abgeschlossenes Wärmeübertragungsleitungssystem (16) aufweist.

12. Grauwasserwärmerückgewinnungssystem (1) nach einem der Ansprüche 1 bis 11, **dadurch gekennzeichnet, dass** ein Ausgang der Wärmeübertragungsvorrichtung (3) für das gereinigte Grauwasser zumindest mittelbar mit einer Kühleinrichtung (14) verbunden ist, wobei das gereinigte Grauwasser ein Kühlmedium der Kühleinrichtung (14) ist.

13. Verfahren zur Wärmerückgewinnung aus Grauwasser, insbesondere mit einem Grauwasserwärmerückgewinnungssystem (1) nach einem der Ansprüche 1 bis 12, wobei das Grauwasser in einer Reinigungsanlage (2) gereinigt wird, wobei die Reinigungsanlage (2) einen Belebungsbehälter (6) mit Mikroorganismen aufweist, wobei in dem Belebungsbehälter (6) organische Bestandteile des Grauwassers durch Mikroorganismen zersetzt werden, wobei das Grauwasser durch eine in dem Belebungsbehälter (6) angeordnete Filtermembran (7) hindurch geführt wird, **dadurch gekennzeichnet, dass** das in der Reinigungsanlage (2) gereinigte Grauwasser einer Wärmeübertragungsvorrichtung (3) zugeführt wird, wobei in der Wärmeübertragungsvorrichtung (3) Wärmeenergie von dem gereinigten Grauwasser an ein Frischwasser übertragen wird.

## Claims

1. Greywater heat recovery system (1) comprising a purification plant (2) and a heat transfer device (3), wherein the purification plant (2) is embodied to purify greywater from a greywater pipe (4), wherein the purification plant (2) has an aeration tank (6) with microorganisms, wherein the microorganisms decompose organic components of the greywater, wherein a filter membrane (7) is arranged in the aeration tank (6), **characterised in that** an outlet of the purification plant (2) is connected to the heat transfer device (3), wherein the heat transfer device (3) is embodied to transfer heat energy from the grey water purified after flowing through the filter membrane (7) to a fresh water in a fresh water line (5).

2. Greywater heat recovery system (1) according to claim 1, **characterised in that** a pore size of the filter membrane (7) is at least 0.1 µm, in particular at least 0.2 µm, particularly preferably at least 0.4 µm.

3. Greywater heat recovery system (1) according to claim 1 or 2, **characterised in that** the purification plant (2) has a preclarification stage (8) with a sieve (9) upstream of the aeration tank (6).

4. Greywater heat recovery system (1) according to one of claims 1 to 3, **characterised in that** the purification plant (2) is arranged in a housing (10), in particular a thermally insulated housing.

5. Greywater heat recovery system (1) according to one of claims 1 to 4, **characterised in that** the purification plant (2) has a storage tank (11) downstream of the aeration tank (6) with a disinfection device (12), in particular a UV lamp.

6. Greywater heat recovery system (1) according to one of claims 1 to 5, **characterised in that** the heat transfer device (3) has a heat exchanger (15) with the fresh water line (5).

7. Greywater heat recovery system (1) according to claim 6, **characterised in that** the heat exchanger (15) is embodied as a plate heat exchanger.

8. Greywater heat recovery system (1) according to one of claims 6 or 7, **characterised in that** heat exchanger (15) has a minimum clear width of at most 30 mm, in particular at most 10 mm, particularly preferably at most 2 mm.

9. Greywater heat recovery system (1) according to one of claims 6 to 8, **characterised in that** the heat transfer device (3) has a bypass line (33) bridging the heat exchanger (15), wherein a ratio of a throughput of the purified greywater through the heat exchanger (15) and the bypass line (33) is adjustable.

10. Greywater heat recovery system (1) according to any one of claims 1 to 9, **characterised in that** the heat transfer device (3) comprises a heat pump (13).

11. Greywater heat recovery system (1) according to one of claims 1 to 10, **characterised in that** the heat transfer device (3) has a closed heat transfer line system (16) for transferring thermal energy from the purified greywater to the fresh water in the fresh water line (5).

12. Greywater heat recovery system (1) according to one of claims 1 to 11, **characterised in that** an outlet of the heat transfer device (3) for the purified greywater is at least indirectly connected to a cooling device (14), the purified greywater being a cooling medium of the cooling device (14).

13. Method for heat recovery from greywater, in particular with a greywater heat recovery system (1) according to one of claims 1 to 12, wherein the greywater is purified in a purification plant (2), wherein the purification plant (2) comprises an aeration tank (6) with microorganisms, wherein organic components of the greywater are decomposed by microorganisms in the aeration tank (6), wherein the grey water is passed through a filter membrane (7) arranged in the aeration tank (6), **characterised in that** the grey water purified in the purification plant (2) is fed to a heat transfer device (3), wherein heat energy is transferred from the purified grey water to a fresh water in the heat transfer device (3).

## Revendications

1. Système de récupération de chaleur des eaux grises (1) comprenant une station d'épuration (2) et un dispositif de transfert de chaleur (3), dans lequel la station d'épuration (2) est conçue pour épurer les eaux grises provenant d'une conduite d'eaux grises (4), dans lequel la station d'épuration (2) possède un bassin d'aération (6) avec des micro-organismes, dans lequel les micro-organismes décomposent les composants organiques des eaux grises, une membrane filtrante (7) est disposée dans le bassin d'aération (6), **caractérisée par le fait qu'**une sortie de la station d'épuration (2) est reliée au dispositif de transfert de chaleur (3), le dispositif de transfert de chaleur (3) étant conçu pour transférer l'énergie thermique des eaux grises purifiées après avoir traversé la membrane filtrante (7) à l'eau douce dans une conduite d'eau douce (5).

2. Système de récupération de chaleur des eaux grises (1) selon la revendication 1, **caractérisé par le fait que** la taille des pores de la membrane filtrante (7) est d'au moins 0,1 µm, en particulier d'au moins 0,2 µm, de préférence d'au moins 0,4 µm.

3. Système de récupération de chaleur des eaux grises (1) selon la revendication 1 ou 2, **caractérisé par le fait que** la station d'épuration (2) comporte un étage de préclarification (8) avec un tamis (9) en amont du bassin d'aération (6).

4. Système de récupération de chaleur des eaux grises (1) selon l'une des revendications 1 à 3, **caractérisé en ce que** la station d'épuration (2) est disposée dans un boîtier (10), en particulier un boîtier thermiquement isolé.

5. Système de récupération de chaleur des eaux grises (1) selon l'une des revendications 1 à 4, **caractérisé en ce que** la station d'épuration (2) comporte un réservoir de stockage (11) en aval du bassin d'aération (6) avec un dispositif de désinfection (12), en particulier une lampe UV.

6. Système de récupération de chaleur des eaux grises (1) selon l'une des revendications 1 à 5, **caractérisé par le fait que** le dispositif de transfert de chaleur (3) comporte un échangeur de chaleur (15) avec la conduite d'eau douce (5).

7. Système de récupération de chaleur des eaux grises (1) selon la revendication 6, **caractérisé par le fait que** l'échangeur de chaleur (15) est un échangeur de chaleur à plaques.

8. Système de récupération de chaleur des eaux grises (1) selon l'une des revendications 6 ou 7, **caractérisé par le fait que** l'échangeur de chaleur (15) a une largeur libre minimale d'au plus 30 mm, en particulier d'au plus 10 mm, de préférence d'au plus 2 mm.

9. Système de récupération de chaleur des eaux grises (1) selon l'une des revendications 6 à 8, **caractérisé par le fait que** le dispositif de transfert de chaleur (3) comporte une conduite de dérivation (33) reliant l'échangeur de chaleur (15), dans lequel le rapport entre le débit des eaux grises purifiées passant par l'échangeur de chaleur (15) et la conduite de dérivation (33) est réglable.

10. Système de récupération de chaleur des eaux grises (1) selon l'une des revendications 1 à 9, **caractérisé par le fait que** le dispositif de transfert de chaleur (3) comprend une pompe à chaleur (13).

11. Système de récupération de chaleur des eaux grises (1) selon l'une des revendications 1 à 10, **caractérisé par le fait que** le dispositif de transfert de chaleur (3) possède un système de ligne de transfert de chaleur fermé (16) pour transférer l'énergie thermique des eaux grises purifiées à l'eau douce dans la ligne d'eau douce (5).

12. Système de récupération de chaleur des eaux grises (1) selon l'une des revendications 1 à 11, **caractérisé en ce qu'**une sortie du dispositif de transfert de chaleur (3) pour les eaux grises purifiées est au moins indirectement connectée à un dispositif de refroidissement (14), les eaux grises purifiées étant un agent de refroidissement du dispositif de refroidissement (14).

13. Méthode de récupération de la chaleur des eaux grises, en particulier avec un système de récupération de la chaleur des eaux grises (1) selon l'une des revendications 1 à 12, dans laquelle les eaux grises sont purifiées dans une station d'épuration (2), dans laquelle la station d'épuration (2) comprend un bassin d'aération (6) avec des micro-organismes, dans lequel les composants organiques des eaux grises sont décomposés par des micro-organismes dans le bassin d'aération (6), les eaux grises passent à travers une membrane filtrante (7) placée dans le bassin d'aération (6), **caractérisé par le fait que** les eaux grises purifiées dans la station d'épuration (2) sont acheminées vers un dispositif de transfert de chaleur (3), dans lequel l'énergie thermique est transférée des eaux grises purifiées à l'eau douce dans le dispositif de transfert de chaleur (3).
